# EUROPEAN PATENT SPECIFICATION

(11) **EP 1 405 955 B1**
(45) Date of publication and mention of the grant of the patent: **27.06.2007**
(21) Application number: 03077930.0
(22) Date of filing: 17.09.2003
(51) Int. Cl.: E03C 1/042, E03C 1/06

(54) **Water delivery means in sanitary systems**
Wasserversorgungsvorrichtung in Sanitärsystemen
Dispositif de distribution d'eau dans des systèmes sanitaires

(30) Priority: 02.10.2002 IT RE20020030 U
(43) Date of publication of application: 07.04.2004
(73) Proprietor: American Standard Europe B.V.B.A., 1160 Bruxelles (BE)
(72) Inventor: Farabone, Giuseppe, 28024 Gozzano (Novara) (IT); Gamba, Matteo, 28021 Borgo Manero Novara (IT)
(74) Representative: Corradini, Corrado

(56) References cited:
- EP-A- 0 369 239
- WO-A-92/10620
- WO-A-99/27832
- GB-A- 2 232 080
- US-A- 3 943 961

## Description

This invention relates to a water delivery unit in sanitary systems according to the preamble of claim 1.

A water delivery unit of this type is known from GB-A-2.232.080.

An object of this invention is to provide a delivery unit to form a compact unit of easier assembly and of particularly pleasant appearance. This and other objects are attained by the invention as characterised in the claims.

The invention is described in detail hereinafter with the aid of the accompanying figures which illustrate one embodiment thereof by way of non-limiting example.

Figure 1 is a perspective view of the entire unit.

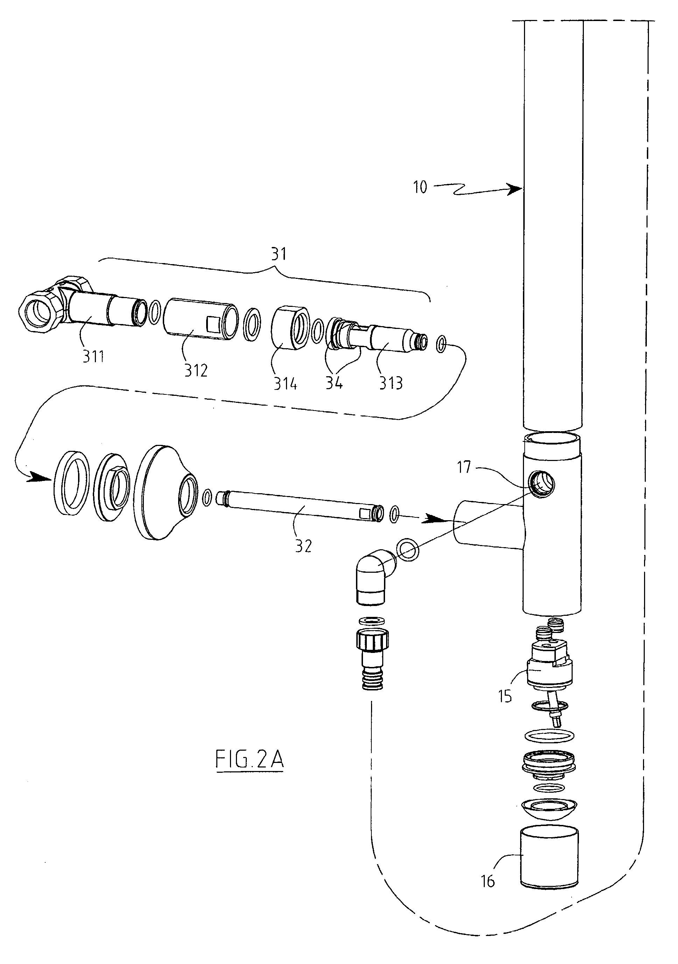

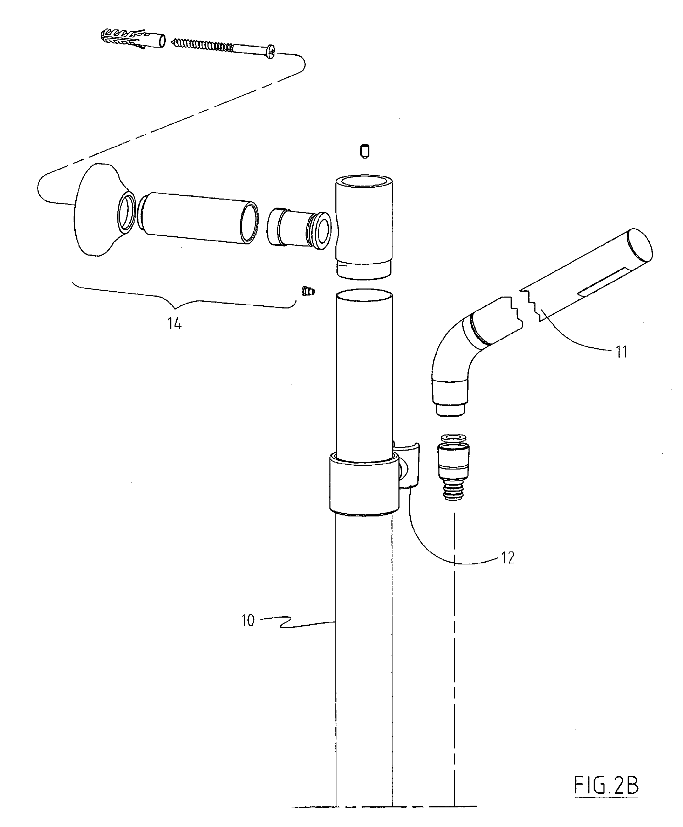

Figures 2a and 2b show respective parts in perspective view, with some components shown exploded.

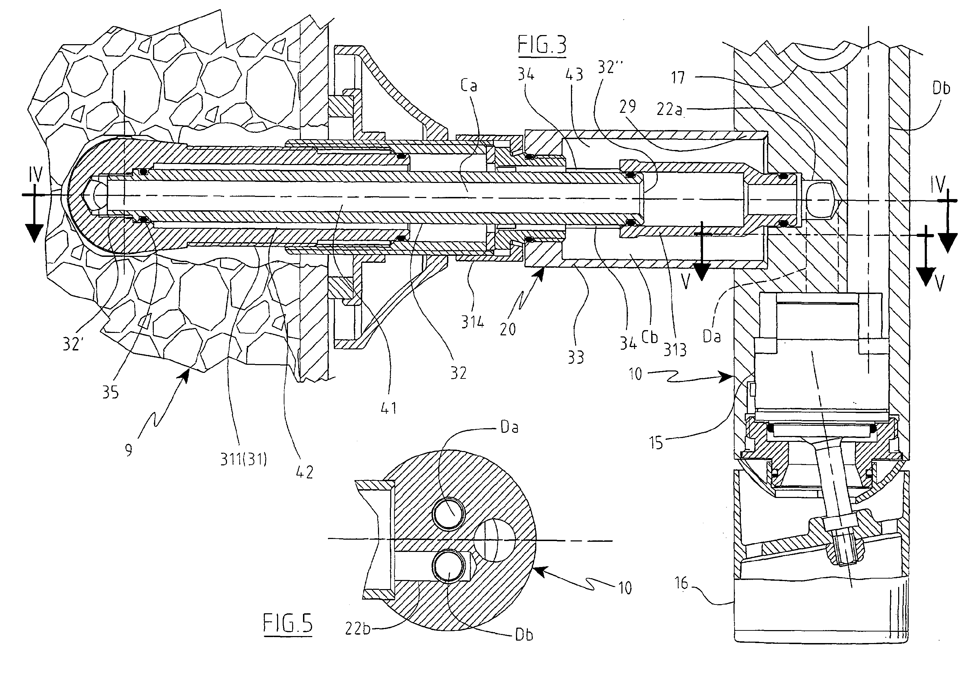

Figure 3 is a section on the plane passing through the axis of the support column and through the axis of the fixing brackets of Figure 1.

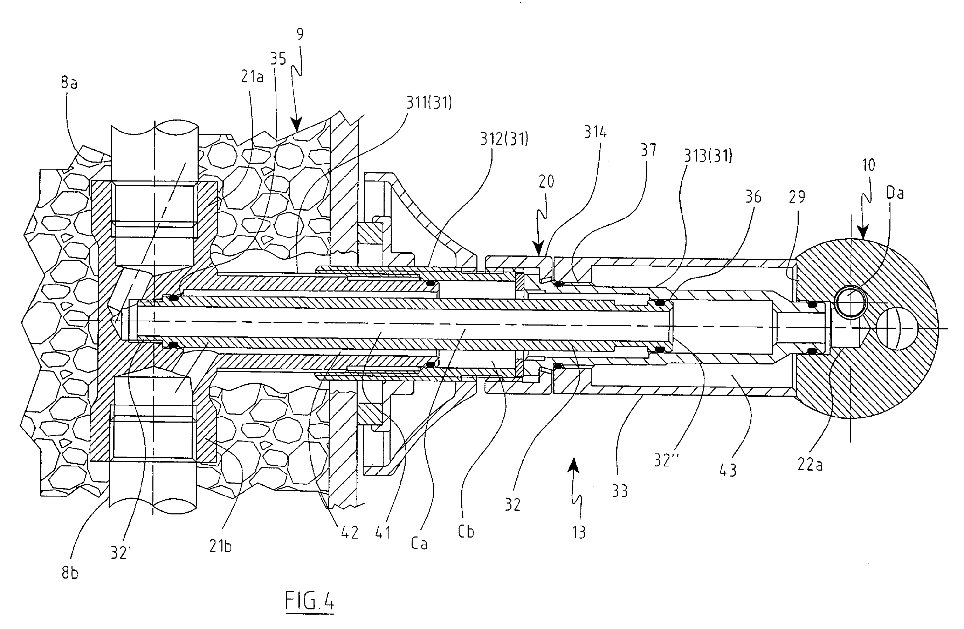

Figure 4 is a section on the plane IV-IV of Figure 3.

Figure 5 is a section on the plane V-V of Figure 3.

The unit of the invention is arranged to be connected to a fixed water delivery system having two separate wall-positioned feed ports 8a and 8b for hot and cold water, and comprises a movable delivery means 11 (that illustrated being a shower means) and a support column 10 for supporting the delivery means 11, for example by a support arm 12 supported by the column 10 such that its axial position relative to the column 10 can be varied.

The support column 10 is fixed at a distance from the wall 9 by at least one fixing bracket, and in particular by two fixing brackets 13 and 14, joined at one end to the wall and at the other end to the support column 10.

In the interior of the column 10 there is positioned a mixer valve 15 for hot and cold water; in the embodiment illustrated in the figures, said valve 15 is positioned in proximity to the lower end of the column 10.

Generally a tubular header unit (indicated overall by 20) is provided, the upstream end of which presents a first pair of inlet ports 21 a and 21 b to be connected to the two feed ports 8a and 8b for hot and cold water, it having in its interior two separate coaxial channels Ca and Cb, each communicating upstream with a respective first inlet port 21 a and 21 b and downstream with a respective separate inlet of the mixer valve 15.

Said first channels Ca and Cb are connected to a second pair of channels Da and Db provided within the body of the support column and having their inlet ports 22a and 22b positioned on the lateral surface of the column and connected to the outlet of a respective first channel Ca, Cb, and their outlet ports connected to a respective separate inlet of the mixer valve 15.

In detail, said tubular header unit 20 comprises a first tubular element 31 with an inner axial cavity, on its upstream end there being provided said first inlet ports 21a and 21b, typically spaced apart by 180 degrees to form a T connector.

Said tubular header unit 20 also comprises a second tubular element 32 coaxial to the first tubular element 31 and inserted into the inner axial cavity thereof, it having its upstream end 32' sealedly engaged with the inner surface of the upstream end of said axial cavity along a first limited axial portion 35 thereof, and its downstream end 32" sealedly engaged with the inner surface of said axial cavity along a second limited axial portion 36 thereof situated in an intermediate axial position along the axial cavity. In this manner the second tubular element 32 divides the axial cavity of the first tubular element 31 into a first axial chamber 41 positioned within the second tubular element 32 and formed from the axial cavity thereof and from that axial cavity portion of the first tubular element 31 lying downstream of the second axial portion 36, and into a second axial chamber 42 which surrounds the outer lateral surface of the second tubular element.

The first axial chamber 41 is connected upstream to a first said inlet port 21 a and downstream to the inlet port 22a of one (Da) of said second channels, the second axial chamber 42 being connected upstream to the other inlet port 21 b.

The tubular header unit 20 also comprises a third tubular element 33 coaxial to the first two tubular elements 31 and 32 and positioned about and coaxial to the downstream portion of the first tubular element 31, with its upstream end sealedly engaged with the outer lateral surface of the first tubular element 31 along a third axial portion 37 thereof lying upstream of said second axial portion 36; the third tubular element 33 has an internal axial cavity defining a third axial chamber 43 which surrounds the outer lateral surface of the downstream portion of the first tubular element 31, and has its downstream end connected to the other inlet port 22b of the other channel Db of said second channels.

The first cavity element 31 possesses passage apertures 34 provided in its lateral wall, in an intermediate position between the second axial portion 36 and the third axial portion 37, to connect the second axial chamber 42 to the third axial chamber 43.

The channel Ca of the first pair of channels is formed from the first axial channel 41, whereas the other channel Cb is formed from the second axial channel 42 and the third axial channel 43.

In the embodiment shown in the figures, the first tubular element 31 is formed from a first T-shaped tube piece 311 carrying the two ports 21a and 21 b and with a telescopically adjustable sleeve 312 screwed on its downstream portion, and from a second sleeve 313 the downstream end of which engages as an exact fit in the port 22a. The other end of the second sleeve 313 is butt-joined to the free end of the first sleeve 312 by an axially acting ring nut 314.

The third tubular element 33 is formed from a single cylindrical sleeve rigidly joined to the column 10 at a seat 29, at the centre of which there is positioned the port 22a which communicates with the axial chamber 41, the other port 22b being positioned in an eccentric position and communicating with the third axial chamber 43 situated in the tubular element 33. The free end of the third tubular element 33 is joined by a screw thread to the outer lateral surface of the second sleeve 313.

The first tube piece 311 is intended to be rigidly fixed to the wall and in particular embedded in it, with its ports 21 a and 21 b connected to the feed ports 8a and 8b; the sleeve 312 projects out from the wall, with its free end butt-joined to the free end of the second sleeve 313 by an axially acting ring nut 314; this mechanical connection provides a structural bracketing member which supports the column 10 and connects it to the wall; said structural member is also reinforced by the second tubular element 32 which is screwed at its upstream end 32' into the tube piece 311 and is inserted at its other end into the axial cavity of the second sleeve 313. Finally, the third tubular element 33 increases the strength of this connection, being both joined to the column 10 and screwed onto the outer surface of the sleeve 313.

Consequently the tubular header unit 20 acts not only as the connection means enabling passage of hot and cold water, but also as a fixing bracket 13 able to support the column 10 and join it to the wall.

By virtue of the special coaxial arrangement of the two channels Ca and

Cd, the overall diameter of the fixing bracket 13 is relatively small, to the extent that it can assume a value more or less equal to that of a traditional fixing bracket the only function of which is to fix the column 10 to the wall, as in the case of the bracket 14.

Moreover, that outer surface of the tubular header unit which projects from the wall can be given a shape and appearance such as to make the unit 20 totally similar to the other fixing bracket 14.

The second channels Da and Db are formed by the two ports 22a and 22b together with two longitudinal conduits 23a and 23b provided within the interior of the column 10 to feed the two inlet ports of the mixer valve 15. This is of traditional type controlled by a knob 16 located on the lower end of the column. To give the unit a pleasant appearance, the knob has the same outer diameter as the column 10, so that when in a position aligned with the column, it appears as a lower end forming one piece with the column.

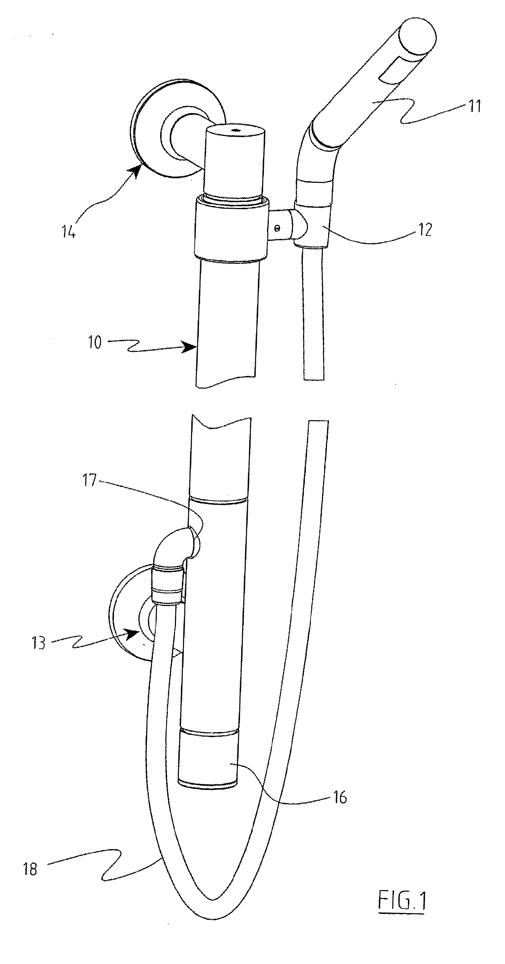

The outlet port 17 of the mixer valve is located on the lateral wall of the column 10 and is connected to the movable delivery means 11 by a flexible hose (see Figure 1).

The other fixing bracket 14 is of traditional type and possesses usual means for supporting the column 10 and fixing it to the wall.

Numerous modifications of a practical and applicational nature can be made to the invention, but without leaving the scope of the appended claims.

## Claims

1. A water delivery unit in sanitary systems comprising, a support column (10) for supporting the delivery-means (11), fixed at a distance from the wall by at least one fixing bracket (13) joined at one end to the wall and at the other end to the support column (10), and a mixer valve (15) for hot and cold water, inserted into the interior of the support column (10), the unit intended to be connected to a fixed water delivery system having for the hot and cold water two separate feed ports (8a, 8b) positioned in the wall, **characterised by** comprising a tubular header unit (20)
comprising an outer tubular means (311, 312, 33) having at its upstream end a first pair of inlet ports (21a, 21b) to be connected to the two hot water and cold water feed ports (8a, 8b),
and an inner tubular means coaxial to the outer tubular means (311. 312, 33) and inserted into its interior,
said outer tubular means (311. 312. 33) and inner tubular means defining in their interior two separate channels (Ca, Cb), each connected upstream to a respective first inlet port (21a, 21b) and downstream to a respective separate inlet (22a, 22b) of the mixer valve (15), the two channels (Ca, Cb) being coaxial to each other;
the tubular header unit (20) acting as the fixing bracket (13) for the column.

2. A unit as claimed in claim 1, **characterised in that** the support column (10) comprises within its body a second pair of channels (Da, Db) having their inlet ports (22a and 22b) positioned on the lateral surface of the column (10) and connected to the outlet of a respective first channel (Ca, Cb), and their outlet ports connected to a respective separate inlet of the mixer valve (15).

3. A unit as claimed in claim 2, **characterised in that** the tubular header unit (20) comprises:
a first tubular element (31) provided on its upstream end with said first inlet ports (21a, 21b), and having an internal axial cavity;
a second tubular element (32) coaxial to the first element (31) and inserted into its interior, its upstream end (32') being sealedly engaged with the inner surface of the upstream end of said internal axial cavity along a first limited axial portion (35) thereof, and its downstream end (32") being sealedly engaged with the inner surface of said internal axial cavity along
a second limited axial portion (36) thereof situated in an intermediate axial position;
said second tubular element (32) defining, together with the first tubular element (31), a first axial chamber (41) positioned within the second tubular element (32) and connected upstream to a first said inlet port (21a) and downstream to the inlet port (22a) of one (Da) of said second channels (Da, Db), and a second axial chamber (42) which surrounds the outer lateral surface of the second tubular element (32) and is connected upstream to the other first inlet port (21 b);
a third tubular element (33) coaxial to the first two tubular elements (31, 32) and positioned about and coaxial to the downstream portion of the first tubular element (31), its upstream end being sealedly engaged with the outer lateral surface of the first tubular element (31) along an axial portion (37) thereof lying upstream of said second axial portion (36);
said third tubular element (33) defining, together with the first tubular element (31), a third axial chamber (43) which surrounds the outer lateral surface of the downstream portion of the first tubular element (31), and has its downstream end connected to the inlet port (22b) of the other of said second channels (22a, 22b);
said first cavity element (31) having passage apertures (34) provided in its lateral wall, to connect the second axial chamber (42) to the third axial chamber (43);
said outer tubular means (311, 312, 33) being defined by a portion of said third tubular element (33) together with the first tubular element (31);
said inner tubular means being defined by said second tubular element (32):
said first channels (Ca, Cb) being defined by the first axial channel (41) and respectively by the second axial channel (42) together with the third axial channel (43).

4. A unit as claimed in claim 1, **characterised in that** the mixer valve (15) is controlled in traditional manner by a knob (16) positioned on the lower end of the support column (10) and having the same outer diameter as the column (10), so that when in a position aligned with the column (10), it appears as a lower end forming one piece with the column (10).

## Patentansprüche

1. Wasserausgabeeinheit in Sanitäranlagen, die eine Trägersäule (10) zum Tragen der Ausgabeeinrichtung (11), die in einem Abstand von der Wand durch mindestens eine Befestigungshalterung (13) befestigt ist, die an einem Ende mit der Wand und an dem anderen Ende mit der Trägersäule (10) verbunden ist, und ein Mischventil (15) für warmes und kaltes Wasser aufweist, welches in das Innere der Trägersäule (10) eingesetzt ist, wobei die Einheit zum Verbinden mit einem festen Wasserausgabesystem vorgesehen ist, welches zwei getrennte Zufuhranschlüsse (8a,8b) für warmes und kaltes Wasser aufweist, die in der Wand positioniert sind,
**dadurch gekennzeichnet, dass**
sie eine rohrförmige Kopfeinheit (20) aufweist, die eine äußere rohrförmige Einrichtung (311,312,33) aufweist, die an ihrem stromaufwärts liegenden Ende ein erstes Paar von Einlassanschlüssen (21a,21b) aufweist, die mit den zwei Warmwasser- und Kaltwasserzufuhranschlüssen (8a,8b) zu verbinden sind,
und eine koaxial zu der äußeren rohrförmigen Einrichtung (311,312,33) verlaufende innere rohrförmige Einrichtung, die in deren Inneres eingesetzt ist,
wobei die äußere rohrförmige Einrichtung (311,312,33) und die innere rohrförmige Einrichtung in ihrem Inneren zwei getrennte koaxiale Kanäle (Ca,Cb) festlegen, die jeweils stromaufwärts mit einem jeweiligen Einlassanschluss (21a,21b) und stromabwärts mit einem jeweiligen separaten Einlass (22a,22b) des Mischventils (15) verbunden sind, wobei die zwei Kanäle (Ca,Cb) koaxial zueinander verlaufen;
wobei die rohrförmige Kopfeinheit (20) als Befestigungshalterung (13) für die Säule wirkt.

2. Einheit nach Anspruch 1,
**dadurch gekennzeichnet, dass**
die Trägersäule (10) innerhalb ihres Körpers ein zweites Paar von Kanälen (Da,Db) aufweist, deren Einlassanschlüsse (22a und 22b) auf der Seitenfläche der Säule (10) positioniert und mit dem Auslass eines jeweiligen ersten Kanals (Ca,Cb) verbunden sind, wobei ihre Auslassanschlüsse mit einem jeweiligen getrennten Einlass des Mischventils (15) verbunden sind.

3. Einheit nach Anspruch 2,
**dadurch gekennzeichnet, dass**
die rohrförmige Kopfeinheit (20) Folgendes aufweist:
Ein erstes rohrförmiges Element (31), welches auf ihrem stromaufwärts liegenden Ende mit den ersten Einlassanschlüssen (21a,21b) vorgesehen ist, und einen inneren Axialhohlraum aufweist;
ein zweites rohrförmiges Element (32), welches koaxial zu dem ersten Element (31) verläuft und in dessen Inneres eingesetzt ist, wobei sein stromaufwärts liegendes Ende (32') abgedichtet mit der Innenfläche des stromaufwärts liegenden Endes des inneren Axialhohlraumes entlang eines ersten begrenzten Axialabschnittes (35) desselben in Eingriff steht, wobei sein stromabwärts liegendes Ende (32") abgedichtet mit der Innenfläche des inneren Axialhohlraumes entlang eines zweiten begrenzten Axialabschnittes (36) desselben in Eingriff steht, der in einer Zwischenaxialposition in Eingriff steht;
ein zweites rohrförmiges Element (32), welches gemeinsam mit dem ersten rohrförmigen Element (31) eine erste Axialkammer (41), die innerhalb des zweiten rohrförmigen Elementes (32) positioniert und stromaufwärts mit einem ersten Einlassanschluss (21a) und stromabwärts mit dem Einlassanschluss (22a) eines (Da) der zweiten Kanäle (Da,Db) verbunden ist, und eine zweite Axialkammer (42) festlegt, welche die äußere Seitenfläche des zweiten rohrförmigen Elementes (32) umgibt und stromaufwärts mit dem anderen ersten Einlassanschluss (21b) verbunden ist;
ein drittes rohrförmiges Element (33), welches koaxial zu den ersten zwei rohrförmigen Elementen (31,32) verläuft und um und koaxial zu dem stromabwärts liegenden Abschnitt des ersten rohrförmigen Elementes (31) positioniert ist, wobei sein stromaufwärts liegendes Ende abgedichtet mit der äußeren Seitenfläche des ersten rohrförmigen Elementes (31) entlang eines Axialabschnittes (37) davon in Eingriff steht, der stromaufwärts des zweiten Axialabschnittes (36) liegt;
wobei das dritte rohrförmige Element (33) gemeinsam mit dem ersten rohrförmigen Element (31) eine dritte Axialkammer (43) festlegt, welche die äußere Seitenfläche des stromabwärts liegenden Abschnittes des ersten rohrförmigen Elementes (31) umgibt, und dessen stromabwärts liegendes Ende mit dem Einlassanschluss (22b) des anderen der zweiten Kanäle (22a,22b) verbunden ist;
wobei das erste Hohlraumelement (31) in seiner Seitenwand vorgesehene Durchgangsöffnungen (34) aufweist, um die zweite Axialkammer (42) mit der dritten Axialkammer (43) zu verbinden;
wobei die äußere rohrförmige Einrichtung (311,312,33) durch einen Abschnitt des dritten rohrförmigen Elementes (33) gemeinsam mit dem ersten rohrförmigen Element (31) festgelegt ist;
wobei die innere rohrförmige Einrichtung durch das zweite rohrförmige Element (32) festgelegt ist;
wobei die ersten Kanäle (Ca,Cb) durch den ersten Axialkanal (41) und jeweils durch den zweiten Axialkanal (42) gemeinsam mit dem dritten Axialkanal (43) festgelegt werden.

4. Einheit nach Anspruch 1,
**dadurch gekennzeichnet, dass**
das Mischventil (15) auf bekannte Art und Weise durch einen auf dem unteren Ende der Trägersäule (10) positionierten Knopf (16) gesteuert wird, der denselben Außendurchmesser wie die Säule (10) aufweist, so dass er dann, wenn er sich in einer mit der Säule (10) ausgerichteten Position befindet, als ein unteres Ende erscheint, welches ein Stück mit der Säule (10) ausbildet.

## Revendications

1. Unité de distribution d'eau dans des systèmes sanitaires comprenant une colonne de support (10) destinée à supporter le dispositif de distribution (11), fixé à distance du mur par au moins une équerre (13) de fixation raccordée à une première extrémité au mur et à l'autre extrémité à la colonne de support (10), et un robinet mélangeur (15) d'eaux froide et chaude, inséré à l'intérieur de la colonne de support (10), l'unité étant destinée à être raccordée à un système fixe de distribution d'eau ayant, pour l'eau chaude et l'eau froide, deux orifices séparés d'alimentation (8a, 8b) disposés dans le mur, **caractérisée en ce qu'**elle comprend une unité à collecteur tubulaire (20)
comprenant un dispositif tubulaire externe (311, 312, 33), ayant, à son extrémité amont, une première paire de orifices d'entrée (21a, 21b) destinés à être raccordés aux deux orifices d'alimentation en eau chaude et en eau froide (8a, 8b), et
un dispositif tubulaire interne coaxial au dispositif tubulaire externe (311, 312, 33) et inséré à l'intérieur de celui-ci,
le dispositif tubulaire externe (311, 312, 33) et le dispositif tubulaire interne délimitant à l'intérieur deux canaux séparés (Ca, Cb) raccordés chacun en amont à un premier orifice respectif d'entrée (21a, 21b) et en aval à une entrée séparée respective (22a, 22b) du robinet mélangeur (15), les deux canaux (Ca, Cb) étant coaxiaux l'un et l'autre,
l'unité tubulaire à collecteur (20) jouant le rôle de l'équerre de fixation (13) pour la colonne.

2. Unité selon la revendication 1, **caractérisée en ce que** la colonne de support (10) comporte à l'intérieur de son corps une seconde paire de canaux (Da, Db) ayant leurs orifices d'entrée (22a et 22b) disposés sur la surface latérale de la colonne (10) et raccordés à la sortie d'un premier canal respectif (Ca, Cb), et leurs orifices de sortie raccordés à une entrée séparée respective du robinet mélangeur (15).

3. Unité selon la revendication 2, **caractérisée en ce que** l'unité tubulaire à collecteur (20) comprend :
un premier élément tubulaire (31) comprenant, à son extrémité amont, les premiers orifices d'entrée (21a, 21b) et ayant une cavité axiale interne,
un second élément tubulaire (32) coaxial au premier élément (31) et inséré à l'intérieur de celui-ci, son extrémité amont (32') étant en coopération étanche avec la surface interne de l'extrémité amont de la cavité axiale interne le long d'une première partie axiale limitée (35) de celle-ci, et son extrémité aval (32") coopérant de façon étanche avec la surface interne de la cavité axiale interne le long d'une seconde partie axiale limitée (36) de celle-ci, placée dans une position axiale intermédiaire,
le second élément tubulaire (32) délimitant avec le premier élément tubulaire (31), une première chambre axiale (41) disposée dans le second élément tubulaire (32) et raccordée en amont à un premier orifice d'entrée (21a) et en aval à l'orifice d'entrée (22a) de l'un (Da) des seconds canaux (Da, Db), et une seconde chambre axiale (42) qui entoure la surface latérale externe du second élément tubulaire (32) et est raccordée en amont à l'autre premier orifice d'entrée (21b),
un troisième élément tubulaire (33) coaxial aux deux premiers éléments tubulaires (31, 32) et disposé autour de la partie aval du premier élément tubulaire (31) et coaxialement à celle-ci, son extrémité amont coopérant de façon étanche avec la surface latérale externe du premier élément tubulaire (31) le long d'une partie axiale (37) de celui-ci qui se trouve en amont de la seconde partie axiale (36),
le troisième élément tubulaire (33) délimitant, avec le premier élément tubulaire (31), une troisième chambre axiale (43) qui entoure la surface latérale externe de la partie aval du premier élément tubulaire (31) et a son extrémité aval raccordée à l'orifice d'entrée (22b) de l'autre des seconds orifices (22a, 22b),
le premier élément à cavité (31) ayant des orifices (34) de passage formés dans sa paroi latérale pour raccorder la seconde chambre axiale (42) à la troisième chambre axiale (43),
le dispositif tubulaire externe (311, 312, 33) étant délimité par une portion du troisième élément tubulaire (33) avec le premier élément tubulaire (31),
le dispositif tubulaire interne étant délimité par le second élément tubulaire (32), et
les premiers canaux (Ca, Cb) étant délimités par le premier canal axial (41) et respectivement par le second canal axial (42) en coopération avec le troisième canal axial (43).

4. Unité selon la revendication 1, **caractérisée en ce que** le robinet mélangeur (15) est réglé de manière traditionnelle par un bouton (16) disposé à l'extrémité inférieure de la colonne de support (10) et ayant le même diamètre externe que la colonne (10), si bien que, lorsqu'elle est en position alignée sur la colonne (10), il paraît faire partie de la colonne (10) à son extrémité inférieure.
